# EUROPÄISCHE PATENTSCHRIFT

(11) **EP 2 407 417 B1**
(45) Veröffentlichungstag und Bekanntmachung des Hinweises auf die Patenterteilung: **15.06.2016**
(21) Anmeldenummer: 11172632.9
(22) Anmeldetag: 05.07.2011
(51) Int. Cl.: B67C 7/00, B29C 49/42

(54) **Abfüllanlage**
Filling assembly
Dispositif de conditionnement

(30) Priorität: 13.07.2010 DE 102010027077
(43) Veröffentlichungstag der Anmeldung: 18.01.2012
(73) Patentinhaber: Krones AG, 93073 Neutraubling (DE)
(72) Erfinder: Laumer, Roland, 93047 Regensburg (DE)
(74) Vertreter: Bittner, Bernhard

(56) Entgegenhaltungen:
- EP-A1- 0 353 534
- EP-A1- 1 251 085
- EP-A1- 2 082 979
- WO-A1-00/66282
- WO-A2-2006/097796
- DE-A1- 4 114 889
- DE-A1-102005 015 565

## Beschreibung

Die Erfindung ist auf eine Anlage zum Behandeln von Behältnissen, insbesondere Vorformlingen und/oder Flaschen, gemäß dem Oberbegriff des Patentanspruches 1 und ein Verfahren gemäß dem Oberbegriff des Patentanspruchs 12 gerichtet.

Die Druckschrift DE 696 228 00 T2 offenbart eine Vorrichtung, gemäß der die zu behandelnden Behältnisse nacheinander verschiedenen Einrichtungen, wie z. B. einer Sterilisiergruppe, einer Spülgruppe, einer Füllgruppe und einer Verschließgruppe, zugeführt werden. Dies führt zu dem Nachteil, dass z. B. bei variierenden Elementen, wie z. B. unterschiedlichen Abfüllprodukten, Flaschen, Deckelelementen, Etiketten, stets eine Umrüstung der gesamten Anlage vorgenommen werden muss, wodurch lange Standzeiten und hohe Umrüstkosten entstehen.

Die Druckschrift DE 10 2005 012 507 A1 offenbart eine Vorrichtung gemäß der ebenfalls ein definierter Transportpfad der Behältnisse vorgegeben ist. Ferner offenbart diese Druckschrift entsprechend dem firmeninternen Stand der Technik gemäß der Bezeichnung DE 10 2010 021 733.6 eine Vorrichtung die zumindest teilweise Behältnisse auf Umwegen, d. h. zum Erzeugen eines Puffers, führt. Puffer weisen jedoch den Nachteil auf, dass sie Platz benötigen und Kosten verursachen.

Die DE 10 2005 015 565 A1 beschreibt eine Anlage zum Herstellen und Bearbeiten von Behältnissen. Dabei sind Behandlungsmaschinen einer Behälterproduktionsvorrichtung parallel nachgeschaltet und von einem Transferelement wahlweise bestückbar.

Speziell für den niedrigen Leistungsbereich (bis ca. 12000 Behälter pro Stunde) werden Maschinen benötigt, welche sterile Produkte in sterile Behälter füllen, da häufig Chargen geringer Größe und kommissionsbedingtes Abfüllen gefordert wird.

Es ist daher Aufgabe der vorliegenden Erfindung eine möglichst flexible und günstige Anlage zum Behandeln von Behältnissen bereitzustellen.

Die Lösung der zuvor gestellten Aufgabe erfolgt erfindungsgemäß durch eine Anlage zum Behandeln von Behältnissen, nach Anspruch 1.

Das Behandeln von Behältnissen umfasst bevorzugt das Umformen, Reinigen, Sterilisieren, Verpacken, Sortieren, Temperieren, Befüllen, Verschließen, Etikettieren, Kombinationen daraus und/oder ähnliches. Es ist zudem vorstellbar, dass mehrere erste und zweite Behälterbehandlungseinrichtungen vorgesehen sind, insbesondere genau zwei erste und genau zwei zweite Behälterbehandlungseinrichtungen.

Diese Lösung ist vorteilhaft, da über die unterschiedlichen Transportpfade die Behältnisse zu den entsprechenden Behandlungseinrichtungen geführt werden können, wodurch keine aufwändige Umrüstung der Anlage erforderlich ist. Aufgrund der direkten Transportpfade wird ferner auf Puffer verzichtet, wodurch die Vorrichtung bzw. Anlage ebenfalls sehr günstig herzustellen ist und wenig Platz benötigt. Um mehr Flexibilität bei der Produktion zu erhalten können beispielsweise auch mehrere Anlagen parallel installiert werden.

Direkt beschreibt in diesem Zusammenhang bevorzugt eine Anordnung ohne Pufferstrecke bzw. dass die Behältnisse auf dem kürzesten Weg mit den jeweiligen Transporteinrichtungen zu der nächsten Behandlungseinrichtung führbar sind. Direkt kann somit aber auch bedeuten, dass der gewählte Transportpfad nicht verlassen wird, wie die z.B. beim Einsatz von Puffern erfolgt.

Erfindungsgemäss weist die Transporteinrichtung mindestens vier Transportsterne auf.

Diese Ausführungsform ist vorteilhaft, da sie die Möglichkeit eröffnet, dass jeder der Transportsterne mit einem weiteren Transportstern ausgewählt aus zwei der Transportsterne funktionell verbunden ist bzw. verbindbar ist. Dies ermöglicht eine äußerst flexible Auswahl bzw. ein äußerst flexiblen Wechsel zwischen den möglichen Transportpfaden. Insbesondere können die einzelnen Transportsterne der Transporteinrichtung somit wechselseitig mit einem bzw. zwei der übrigen Transportsterne der Transporteinrichtung funktionell gekoppelt werden.

Gemäß einer weiteren bevorzugten Ausführungsform der Erfindung sind mit den Transportsternen weitere Transporteinrichtungen verbunden.

Somit bilden die vier Transportsterne bevorzugt eine Einrichtung bzw. eine Einheit, die auch z. B. baulich durch einen gemeinsamen Tisch, insbesondere einem Kreuztisch oder ähnlichem, von weiteren Einrichtungen getrennt angeordnet bzw. anordenbar ist. Die Gesamtheit der Transportsterne der Transporteinheit der vorliegenden Erfindung kann daher auch als Zuordnungseinrichtung zum Zuordnen bzw. definierten Schleusen von Behältnissen angesehen werden. Die weiteren Transporteinrichtungen können ebenfalls als Rotationsförderer und/oder Linearförderer ausgebildet sein und dienen bevorzugt dazu, die Behältnisse der ersten und/oder der zweiten Behandlungseinrichtung ab- oder zuzuführen.

Gemäß einer weiteren bevorzugten Ausführungsform der vorliegenden Erfindung weisen die Transportsterne der Transporteinrichtung jeweils eigene Antriebe auf.

Diese Ausführungsform ist vorteilhaft, da die Transportsterne aufgrund eigener Antriebe, die beispielsweise elektrisch, hydraulisch, pneumatisch, mechanisch, Kombinationen daraus und/oder ähnlich angetrieben sein können, eine definierte Anpassung an die jeweiligen Zuführ- und/oder Abführgeschwindigkeiten der vor- und/oder nachgelagerten Einrichtungen ermöglicht.

Gemäß einer weiteren bevorzugten Ausführungsform der vorliegenden Erfindung weisen die Transportsterne Greifelemente auf, die bevorzugt zumindest teilweise steuerbar sind, d.h., dass die Greifelemente bevorzugt definiert geöffnet und geschlossen werden können..

Es ist zudem denkbar, dass auch die Geschwindigkeit der Transportsterne z. B. in Abhängigkeit vom Transportweg konfigurierbar bzw. einstellbar ist. Im Falle verschiedener Transportwege können beispielsweise die Behältnisse im ersten Transportweg schneller als in einem weiteren Transportweg gefördert werden. Ferner ist diese Ausführungsform vorteilhaft, da das Aufnehmen und Abgeben bzw. Übergeben von Behältnissen definiert durchführbar ist. Dies ist selbst bei hohen Drehgeschwindigkeiten der Transportsterne möglich. Die Steuerung der Greifelemente kann dabei über Positionsdaten, d. h. beispielsweise über eine motorisierte Ansteuerung, und/oder über Steuerkurven bewirkt werden. Bevorzugt ist eine Sensoreinrichtung und/oder eine Steuereinrichtung zum Überwachen, Steuern und/oder Verändern der Abläufe vorgesehen bzw. mit der Anlage gekoppelt.

Gemäß einer weiteren bevorzugten Ausführungsform der vorliegenden Erfindung ist die erste Behälterbehandlungseinrichtung eine (Streck-)Blaseinrichtung zum Umformen von Vorformlingen in Flaschen.

Diese Ausführungsform ist vorteilhaft, da das Umformen der Vorformlinge in Behältnisse zeitlich und räumlich sehr nah zum Zeitpunkt der Abfüllung bzw. weiterer Behandlungsschritte erfolgt. Dies ermöglicht einen einfachen und stabilen Transport der Behältnisse über große Strecken, da die Behältnisse in Form von Vorformlingen zum einen eine wesentlich kleinere Größe aufweisen als das bearbeitete bzw. umgeformte Behältnis und die Vorformlinge wesentlich robuster sind als umgeformte Behältnisse.

Gemäß einer weiteren bevorzugten Ausführungsform der vorliegenden Erfindung ist die zweite Behälterbehandlungseinrichtung ein Modul zur (aseptischen) Abfüllung von Behältnissen und/oder eine Einrichtung zum Etikettieren der Behältnisse.

Diese Ausführungsform ist vorteilhaft, da nach der Umformung der Vorformlinge in Behältnisse eine baldige Weiterbehandlung dieser Behältnisse möglich ist. Dies ermöglicht z. B., dass keine Lager zum Aufbewahren umgeformter bzw. gefüllter Behältnisse vorgesehen werden müssen.

Gemäß einer weiteren bevorzugten Ausführungsform der vorliegenden Erfindung weist das Modul zur aseptischen Abfüllung ein Gehäuse auf, durch das ein Reinraum ausgebildet ist und in dem die Behältnisse desinfizierbar, abfüllbar und/oder verschließbar sind.

Diese Ausführungsform ist vorteilhaft, da mehrere Einrichtungen zum besseren Transport und/oder gemeinsamen Ausbilden eines Reinraums und somit zum Reduzieren der Komplexität, der Anzahl an Bauteilen, des Energieverbrauchs und ähnlichem funktionell miteinander koppelbar sind.

Gemäß einer weiteren bevorzugten Ausführungsform der vorliegenden Erfindung ist im Transportpfad, insbesondere in der Transporteinrichtung und/oder in dem Modul zur aseptischen Abfüllung, mindestens eine Behälterausstoßeinrichtung zum Ausstoßen fehlerhaft behandelter Behältnisse angeordnet.

Diese Ausführungsform ist vorteilhaft, da defekte bzw. mangelhafte Behältnisse beispielsweise direkt nach der Detektion der als mangelhaft bewerteten Eigenschaft oder zu einem späteren geeigneterem Zeitpunkt aus der Anlage bzw. den Transportpfad der Behältnisse ausschleusbar ist. Dies ermöglicht die Einsparung von Kosten, da ein bereits frühzeitig als mangelhaft erkanntes Behältnis nicht weiter behandelt werden muss, wodurch die Einsparung beispielsweise von Reinigungsfluiden, Energie, Befüllmittel und Ähnlichem erfolgen kann.

Gemäß einer weiteren bevorzugten Ausführungsform der vorliegenden Erfindung ist ein erster Teil der Behältnisse über einen ersten Transportpfad förderbar und ein zweiter Teil der Behältnisse ist über mindestens einen weiteren Transportpfad förderbar, wobei mindestens ein Transportstern zeitweise den ersten Transportpfad und zeitweise den weiteren Transportpfad mit ausbildet. Bevorzugt ist jeder dieser Transportsterne wahlweise zumindest zeitweise mit nur einem weiteren Transportstern gekoppelt bzw. wirkt nur mit diesem zusammen, d. h. bildet einen Transportpfad mit diesem aus.

Diese Ausführungsform ist vorteilhaft, da einzelne Transportsterne oder beliebige Transportmittel durch eine veränderte Ansteuerung und somit ohne aufwändige Umrüsttätigkeiten zur Ausbildung verschiedener Transportpfade verwendet werden kann.

Gemäß einer weiteren bevorzugten Ausführungsform der vorliegenden Erfindung sind die Behältnisse mit der Transporteinrichtung zumindest zeitweise auf demselben Transportpfad transportierbar.

Diese Ausführungsform ist vorteilhaft, da z. B. verschiedene oder gleiche Behältnisse von zwei ersten Behandlungseinrichtungen kommend in einer zweiten Behandlungseinrichtung behandelt, insbesondere gleich behandelt, werden können.

Die Erfindung ist auch auf ein Verfahren zum Behandeln von Behältnissen nach Anspruch 12 gerichtet.

Weitere Vorteile, Ziele und Eigenschaften vorliegender Erfindung werden anhand nachfolgender Beschreibung anliegender Zeichnungen erläutert, in welchen beispielhaft aseptische Abfüllanlagen dargestellt sind. Bauteile der aseptischen Anlagen, welche in den Figuren wenigstens im Wesentlichen hinsichtlich ihrer Funktion übereinstimmen, können hierbei mit gleichem Bezugszeichen gekennzeichnet sein, wobei diese Bauteile nicht in allen Figuren beziffert oder erläutert sein müssen.

Darin zeigen:
- Fig. 1: eine Frontansicht der Grundmaschine;
- Fig. 2: eine Draufsicht der Grundmaschine der Anlage;
- Fig. 3: eine Frontansicht einer vorteilhaften Blockvariante;
- Fig. 4: eine Blockvariante mit Kreuztisch;
- Fig. 5: eine Darstellung eines Produktionswechsels;
- Fig. 6: eine weitere Blockvariante mit Kreuztisch;
- Fig. 7: eine weitere Ausführungsform der Grundmaschine;
- Fig. 8: einen Querschnitt durch ein Modul einer aseptischen Abfüllanlage; und
- Fig. 9: ein Beispiel einer bevorzugten Anordnung einer Vielzahl an Anlagenkomponenten.

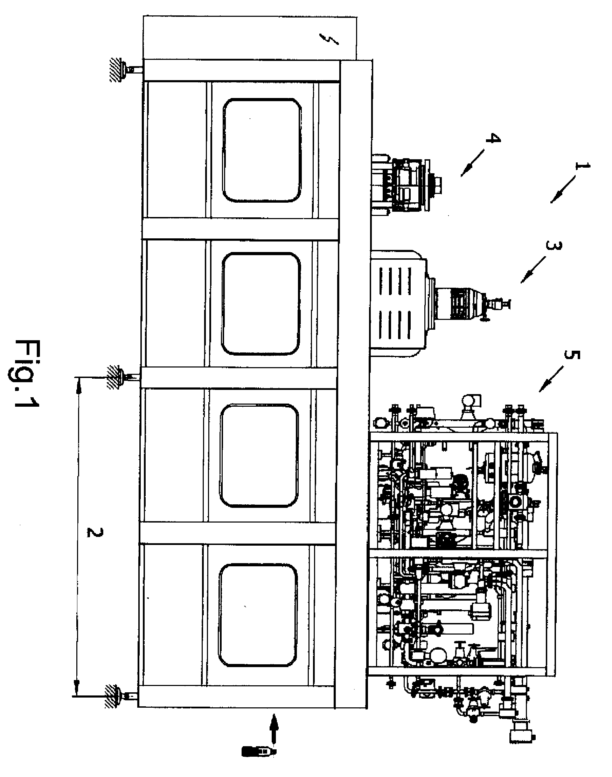

Fig. 1 zeigt die Frontansicht eine Grundmaschine 1. Die Grundmaschine besteht bevorzugt im Wesentlichen aus einer Sterilisationszone 2, einer Füllmaschine 3 und einer Verschließmaschine 4. Die Medienaufbereitung 5 ist vorzugsweise am Dach der Anlage 1 positioniert. Die behandelten Medien sind bevorzugt Fluide, insbesondere Flüssigkeiten, wie Getränke, fließfähige Lebensmittel und ähnliches sowie Hilfsmedien wie (Steril-) Gase, (Steril-) Wasser, Desinfektionsmittel. Die Behälterbehandlungsanlage weist bevorzugt mehreren Transfereinheiten 13, mindestens eine Behälterbehandlungszone 2 zur Sterilisation der Behälter, eine Füllvorrichtung 3, eine Verschließvorrichtung 4 und eine trockenen Zone entlang der Förderlinie F1 zwischen Einlaufschleuse 6 und Auslaufschleuse 9 auf, wobei bevorzugt eine weitere Sterilisationskammer 23 vorhanden ist, in der die Verschlüsse durch Schwerkraft der Verschließmaschine 4 zugeführt werden. Vorstellbar ist hierbei auch, dass die Behälter- und Verschlusssterilisation in einer Kammer angeordnet sind.

Es ist ebenfalls denkbar, dass ein Einlaufmodul 12 mit Vorwärmeinheit 29 vorhanden ist. Besonders bevorzugt werden temperierte Behälter aus einer Behälterherstellmaschine 19 verarbeitet und ein Kreuztisch K mit mehreren Förderlinien als Einlaufmodul 12 angedockt ist. Denkbar ist ebenfalls, dass ein Kreuztisch K zur Vereinigung mehrerer Förderlinien als Auslaufmodul 31 angedockt ist. Mit dem Kreuztisch können bevorzugt auch Behälterbehandlungsanlagen mit Vorformlings-Sterilisation verknüpft werden. Eine Förderlinie besteht dann beispielsweise aus Preformzuführung, Streckblasmaschine mit Vorformlings-Sterilisationsmodul (vor dem Heizofen, im Heizofen, zwischen Heizofen und Blasrad oder direkt im Blasrad), Kreuztisch, Füller, gegebenenfalls mit zwischengeschalteten Transporteinrichtungen. Weiter bevorzugt weist die Behandlungseinheit 8 zwei Sektionen b/c auf, in denen die Behälter mit unterschiedlichen Temperaturen behandelt werden.

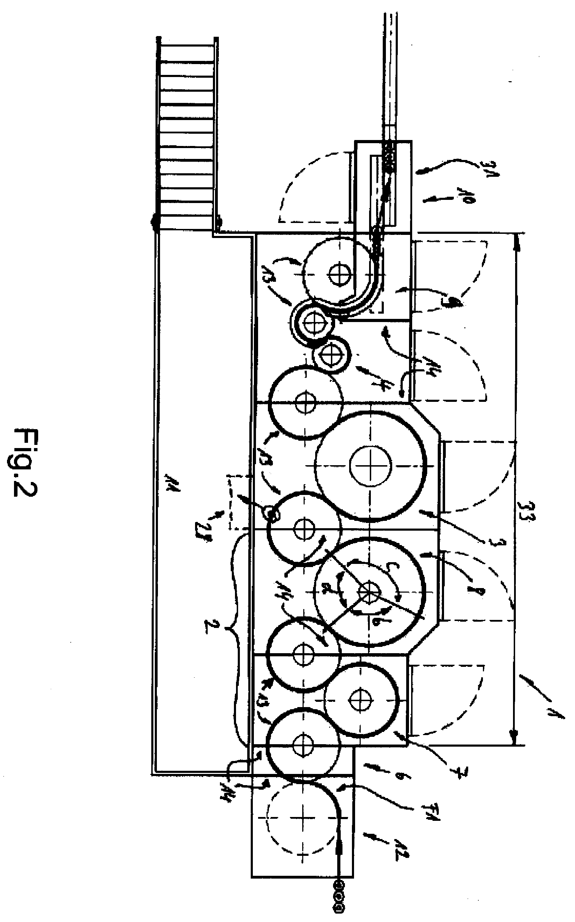

Fig. 2 zeigt eine Draufsicht der Grundmaschine der Anlage, die z.B. eine zweite Behälterbehandlungsanlage darstellen kann. In einem Gehäuse, insbesondere einem Isolatorgehäuse 33, befinden sich mindestens eine Behandlungseinheit 7 mit einem Behandlungsfluid, insbesondere einem Gas, wie z.B. H2O2, eine Behandlungseinheit 8 mit wenigstens einem weiteren Medium, wie z.B. steriler Luft, eine Behälterfülleinheit 3 und/oder eine Verschließeinheit 4. Zweckmäßig ist gleich die Auslaufschleuse 9 in das Gehäuse integriert. Bedingt durch die Fertigung ist das Isolatorgehäuse 33 in Länge, Breite und Höhe beschränkt, deshalb kann die Einlaufschleuse 6 und/oder besonders das Auslaufgehäuse in das Schweißteil des Gehäuses integriert sein, dies muss jedoch nicht in jeder Ausführungsform so sein. Wegen der Verschleppung von Medien im Isolatorgehäuse 33 sind die einzelnen Behandlungseinheiten 3/4/7/8 bevorzugt durch Trennwände 14 getrennt. Transfereinheiten 13 transportieren die Behälter von einer Behandlungseinheit zur nächsten.

Je nach Anforderung kann das Einlaufmodul 12 eine Streckblasmaschine, eine Behälterverteileinheit, eine Behältervorwärmeinheit oder im einfachsten Fall eine Transfereinheit, insbesondere mit Lufttransport, sein.

Zur Produktionsvorbereitung können das Isolatorgehäuse 33 und deren Einbauten vorzugsweise mit Lauge gereinigt und nach einer Trocknungsphase mit einem weiteren Medium, wie z.B. H2O2-Gas, sterilisiert werden. Um die Zugänglichkeit der Medienaufbereitung zu gewähren ist bevorzugt ein Podest 11 vorhanden.

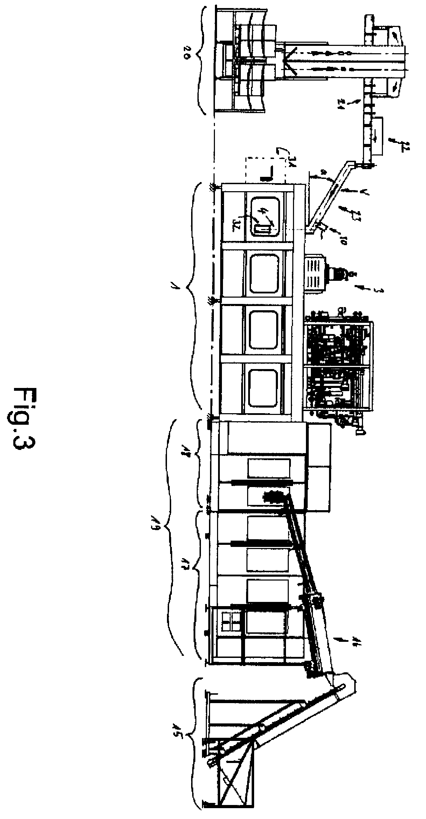

Fig. 3 zeigt eine Frontansicht einer vorteilhaften Blockvariante.

Die Aseptikanlage 1 ist bevorzugt mit einer Streckblasmaschine 19, die z.B. eine erste Behälterbehandlungseinrichtung sein kann, geblockt, d.h. die Transporteinrichtungen sind bevorzugt synchronisiert. Die Vorformlinge werden über eine Zuführeinheit 15 zur Sortierung 16 gebracht. Dann werden sie über eine Transporteinheit, wie z.B. eine Rutsche, aktiv oder passiv in den Heizofen 17 gefördert. Um die Vorformlinge zu reinigen, insbesondere von Staubpartikeln, ist bevorzugt zwischen Sortierung und Heizrad ein Luftrinser (nicht gezeigt) eingebaut. In der Streckblaseinheit 18 werden die Behälter ausgeformt und dann über eine Transfereinheit an die Sterilisations- und Abfüllanlage übergeben.

Eine vorteilhafte Aufstellung der Verschlusszuführung 20, ist z.B. in Fig. 3 gezeigt. Über eine Doppelkaskade können zum Beispiel verschiedene, insbesondere mehrere, wie z.B. zwei oder drei verschiedene, Verschlussarten bereitgestellt werden. Auf einer Transporteinheit, wie z.B. einem Transportband 21, sind die Verschlüsse querförderbar. Eine Inspektionseinheit 22 kann zum Kontrollieren der Verschlüsse, insbesondere auf Formhaltigkeit, vorgesehen sein, bevor die Verschlüsse der Verschlusssterilisationskammer 23 zugeführt werden. Im einfachsten Fall rutschen die Verschlüsse daher durch die eigene Schwerkraft bevorzugt in einer Rinne durch die Kammer 23. Durch die schräge Anordnung der Kammer (Anstellwinkel von 15-90° bevorzugt von 25-40° und besonders bevorzugt von ca. oder genau 30°) wird Behandlungszeit gewonnen. Vorzugsweise werden die Verschlüsse auch mit wenigstens einem Gas, insbesondere H2O2, behandelt. Bevorzugt ist an oder in der Kammer eine Einheit zur Regelung der Verschlussgeschwindigkeit vorhanden ist, um eine bestimmte Behandlungszeit zu gewährleisten.

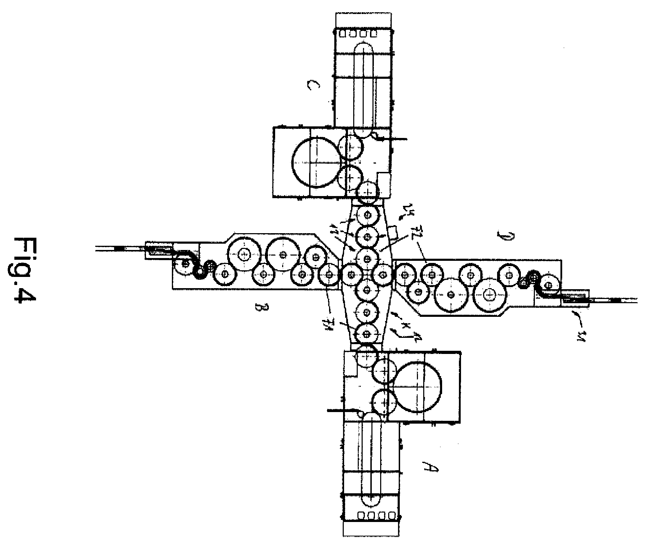

Fig. 4 zeigt eine Blockvariante mit Kreuztisch, um mehr Flexibilität bei sehr kurzen Umstellzeiten zu gewinnen. Auf Maschine A können zum Beispiel Behälter mit einer bestimmten Form und Größe (z. B. 500ml-Behälter) hergestellt werden. Über einen Kreuztisch K versorgt Maschine A, dargestellt mit Förderlinie F1, Maschine B. Maschine B kann z. B. eine Füllmaschine sein, die ein Getränk, wie z.B. Erdbeersaft, mit roten Verschluss abfüllt.

Maschine C stellt z. B. Behälter her mit einer anderen Größe (z. B. 1000ml-Behälter) als Maschine A. Die Füllmaschine D füllt zum Beispiel ein weiteres Getränk, wie z.B. Traubensaft, ab und verschließt es z.B. mit einem blauen Verschluss. Die Förderlinie F2 repräsentiert die Behälterlaufbahn von der Maschine C über den Kreuztisch zur Maschine D.

Mit dem oben gezeigten Beispiel können zwei Endprodukte produziert werden, wie z.B. Traubensaft mit blauem Verschluss im 1000ml-Behälter und Erdbeersaft mit rotem Verschluss im 500ml-Behälter.

Der Kreuztisch bzw. die Transporteinrichtung ist somit aus den vier Transportsternen T₅₁, T₅₂, T₅₃, T₅₄ aufgebaut, die bevorzugt jeweils mit Servomotoren ansteuerbar sind. In Abhängigkeit vom ausgewählten Transportweg können die Transportsterne bzw. Greifelemente der Transportsterne die transportierten Behältnisse kommend von der ersten Behandlungseinrichtung einem von zwei weiteren Transportsternen übergeben. Dies erfolgt beispielsweise derart, dass Behältnisse über den Transportstern T₅₁ zu dem Transportstern T₅₂ gefördert werden. Sollte ein Produktionswechsel vorgenommen werden müssen, so erfolgt beispielsweise durch Neu- bzw. Umkonfiguration der Steuerung bzw. der Ansteuerung der Transportsterne T₅₁, T₅₂, T₅₃, T₅₄ die Einstellung neuer Förderwege. D.h., dass nach einem derartigen Produktionswechsel der Transportstern T₅₁ die Behältnisse nicht mehr an den Transportstern T₅₂, sondern an den Transportstern T₅₄ übergibt. Ähnlich erfolgt der Produktionswechsel für den Transportstern T₅₃, dieser fördert dann nämlich die Behältnisse nicht mehr zu dem Transportstern T₅₄, sondern zu dem Transportstern T₅₂. Ein Produktionswechsel kann ebenfalls dadurch bewirkt werden, dass die Transportsterne T₅₁, T₅₂, T₅₃, T₅₄ in ihrer Gesamtheit als Kreuztisch derart rotiert werden, dass z.B. der Transportstern T₅₁ die Position des Transportsterns T₅₄ einnimmt. Vorteilhaft ist dabei, dass keine der beiden Streckblasmaschinen auf einen anderen Behälter umgerüstet werden muss, was üblicherweise sehr zeitaufwändig ist. Weiterhin können die Abfüllprodukte in den jeweiligen Füllmaschinen verbleiben, so dass die Füllmaschinen nicht gespült oder gereinigt/sterilisiert werden müssen.

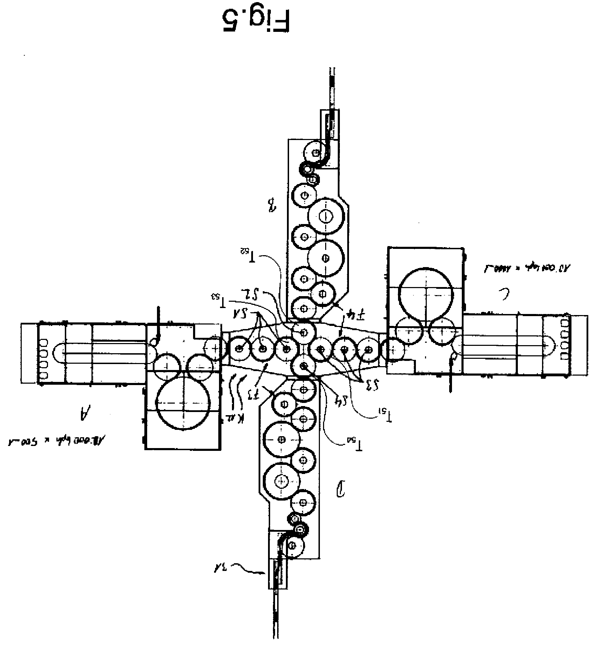

Fig. 5 zeigt den einfachen Produktionswechsel. Maschine A versorgt nun über die Förderlinie F3 die Maschine D und Maschine C über die Förderlinie F4 Maschine B.

Die Endprodukte können dann Traubensaft mit blauem Verschluss im 500ml-Behälter und Erdbeersaft mit rotem Verschluss im 1000ml-Behälter sein.

Ein Kreuztisch K ist besonders für Anlagen im niedrigen Leistungsbereich geeignet, da in der Regel keine Pufferstrecken zwischen den Maschinen benötigt werden und die Einzelmaschinen noch relativ geringe Aufstellflächen belegen. Kommt es bei der Produktion besonders auf Hygiene an, kann der Kreuztisch, ebenfalls, wie die in Fig. 2 gezeigte Maschine, automatisiert gereinigt und/oder sterilisiert werden, da er bevorzugt in das Isolatorgehäuse integriert ist. In der Produktion kann z.B. durch installierte Lüftungstechnik das Gehäuse des Kreuztisches mit einem Überdruck beaufschlagt sein.

Zusätzlich können auf den Transfereinheiten (T1, T2, T3, T4) Behälterbehandlungseinheiten installiert sein. Es ist dabei vorstellbar, dass Behandlungen durch Einrichtungen, wie z.B. eine Behältervorwärmeinheit, Behältersterilisationseinheit oder Behandlungen, wie z.B. Behälterkühlung, z. B. bei karbonisierten Getränken, die Behälterkennzeichnung (Datierung, Strichcode) und/oder die Behälteretikettierung durchführbar sind. Um fehlerhafte Behälter aus der Produktionslinie zu Entfernen kann zweckmäßig am Kreuztisch bzw. der Transporteinrichtung eine Behälterausstoßeinrichtung 24 vorhanden sein. Bevorzugt ist eine Behälterschleuse 28 bzw. eine Verschlussschleuse 32 an den Förderlinien F1/F2 bzw. V zwischen den Behältersterilisation 2 bzw. der Verschlusssterilisation 23 und dem Maschinenauslauf 27/31 vorhanden ist.

Um die Einzelmaschinen A/B/C/D und K synchron und/oder unabhängig laufen lassen zu können, ist zumindest jede Maschine vorzugsweise mit einer oder mehreren Servoachse(n) ausgestattet. Die jeweilige Ansteuerung erfolgt bevorzugt durch eine nicht gezeigte Steuereinheit entsprechend einem auswählbaren Produktionsprogramm.
Vorzugsweise ist der Kreuztisch mit vier Antrieben S1/S2/S3 und S4, wie in Fig. 5 gezeigt, ausgestattet. In dieser Konfiguration können die Förderlinien F3 und F4 (bzw. F1 und F2) mit unterschiedlichen Produktionsleistungen belegt sein.

Im oben genannten Beispiel kann die Ausbringung der Förderlinie F3 12 000 Behälter pro Stunde mit 500ml Traubensaft und die der Förderlinie F4 10 000 Behälter pro Stunde mit 1000ml Erdbeersaft sein.

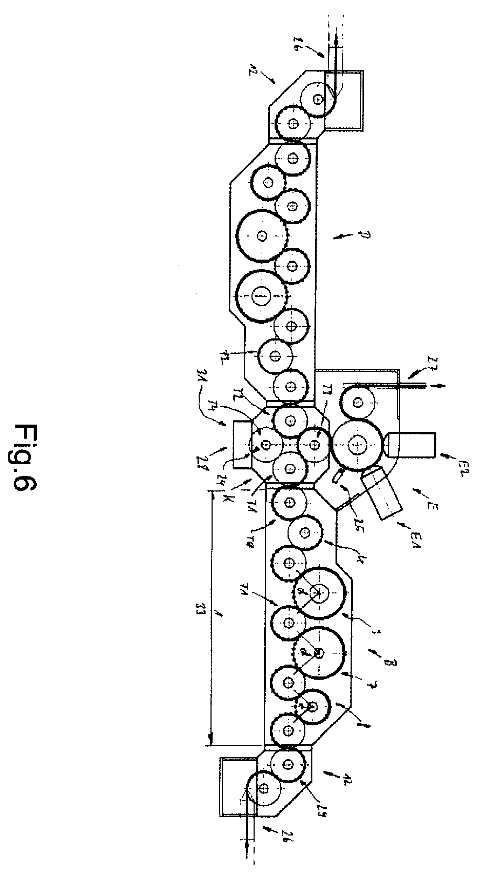

Fig. 6 zeigt eine weitere Blockvariante mit Kreuztisch K.

An den aseptischen Abfüllanlagen B und D ist je ein Einlaufmodul 12 installiert. Die Behälter werden in diesem Beispiel über je eine Transporteinheit, wie z.B. einen Lufttransporteur 26, der Anlage zugeführt. Die Förderlinien F1/F2 laufen am Kreuztisch zusammen und die Behältnisse werden dann in der Etikettiermaschine E mit einem Etikett versehen. Bevorzugt ist die aseptische Behandlungsmaschine 1 mit einer Etikettiermaschine E (mit ein oder mehreren Aggregaten E1/E2 usw.) geblockt.

Auf besondere einfache Weise können somit auf einer solchen Anlage verschieden Produkte, Behältnisse, etc. verarbeitet werden. So können beispielsweise mit der ersten Behälterbehandlungseinrichtung Vorformlinge in Flaschen umgeformt werden, d.h., dass die erster Behälterbehandlungseinrichtung z.B. als Blasmaschine ausgeführt sein kann, und mit der zweiten Behälterbehandlungseinrichtung können die Flaschen befüllt werden, d.h., dass die zweite Behälterbehandlungseinrichtung z.B. ein Füller sein kann. Es ist aber ebenfalls denkbar, dass die erste Behälterbehandlungseinrichtung das Befüllen der Flaschen bzw. Behälter durchführt und die zweite Behälterbehandlungseinrichtung eine Etikettiereinrichtung ist.

Zum Beispiel ist es möglich, auf der Förderlinie F1 Traubensaft mit blauem Verschluss im 500ml-Behälter und auf der Förderlinie F2 Erdbeersaft mit rotem Verschluss im 500ml-Behälter zu produzieren. Beide Linien produzieren bevorzugt zwischen 6000 und 18000 Behältnissen pro Stunde und besonders bevorzugt ca. 12 000 Behälter pro Stunde. Bevorzugt laufen beide Förderlinien mit der gleichen Leistung.

Durch die zwei Aggregate E1 und E2 ist ein dem Flascheninhalt entsprechendes Etikett auf dem Behälter aufbringbar. Die Anlagensteuerung und/oder ein Scanner 25 stellt sicher, dass das entsprechende Etikett dem Behälter mit dem entsprechenden Flascheninhalt zugeordnet wird. Es ist dabei denkbar, dass die Behälter, die über die Förderlinien 1 und 2 befördert werden, ein Identifizierungsmerkmal, z. B. in Form eines Barcodes, aufweisen.

Im oben genannten Beispiel werden dann 24000 500ml-Behälter pro Stunde über den Maschinenauslauf 27 an die Verpackungslinie befördert, d.h. 12 000 B/h mit Traubensaft mit blauem Verschluss und blauen Etikett sowie 12 000 B/h mit Erdbeersaft mit roten Verschluss und roten Etikett.

Jeder zweite Behälter hat dann einen unterschiedlichen Inhalt / Verschluss und Etikett gegenüber seinem direkten Vorgänger. Dies ermöglicht es in der Verpackungslinie Einheiten aus zwei verschiedenen Sorten abzupacken. Im oben genannten Beispiel kann ein Sechserpack mit 3x Traubensaft und 3x Erdbeersaft erzeugt werden. Ein solches System kann beispielsweise als ein 2-Farbenabfüllsystem bezeichnet werden.

Wird nur eine Farbe benötigt, so kann die Etikettiermaschine E direkt an eine Behandlungsmaschine 1 geblockt sein.

Vorzugsweise werden die verschlossenen Behälter bogenförmig über Transportsterne Tₙ gehandelt. Da in vielen Fällen der Verschluss ein oder mehrere Tragringe der Behälter verdeckt, können die Behälter nicht mehr durchgängig über ein Greifersystem transportiert werden. Es ist daher bevorzugt, dass die Behälter über Transportelemente, wie z.B. eine oder mehrere Halstaschen bzw. über ein höhenverstellbares Bodenstützelement förderbar sind. Ein solches Bodenstützelement ist in DE102009058084.0 beschrieben.

Bei einigen Etikettierverfahren ist es notwendig den Abstand zwischen den Behältern zwischen der Füllmaschine A/B und der Etikettiermaschine E zu ändern. Dies kann z.B. durch den Einsatz eines Teilungsverzugssterns bewirkt werden.

Somit kann das Behälterhandling der in Fig. 6 gezeigten Anlage im Bereich des Kreuztisches K beispielsweise wie folgt aussehen:
T0 Halsring-Taschenstern
T1/T2 Transportstern mit Bodenstützelement
T3 Teilungsverzugsstern
T4 Transportstern mit Greifelementen

In einer Füllmaschine B/D kann es vorkommen, dass ein Behandlungsschritt (Sterilisieren / Füllen und/oder Verschließen) eines oder mehrerer Behälter nicht vollständig vollzogen wird. Solche Behälter können bevorzugt aus der Förderlinie F1 bzw. F2 mittels eines Transportsterns T4 über eine Schleuse 28 genommen werden. Erkannt werden fehlerhafte Behandlungsschritte bzw. Behältnisse durch eine Sensorik, die an der Förderlinie und/oder in den Behandlungselementen (z. B. Füllventil, Verschließelement usw.) vorsehbar ist. Die Anlagensteuerung merkt sich (z. B. mittels Schieberegister) einen fehlerhaft behandelten Behälter, ermittelt den Partnerbehälter in der anderen Förderlinie und gibt den Befehl an einen Transportstern, wie z.B. den Transportstern T3 bzw. T4, entweder von T1 auf T3 nicht zu übernehmen, oder von T1 bzw. T2 nach T4 zu übergeben. Eine Ausstoßeinrichtung 24 entfernt die Behälter aus dem Transportsystem.

Besonders von Vorteil ist dieses System um Verunreinigung in den nachfolgenden Maschinen und Anlagenteilen, wie z. B. der Etikettiermaschine E, durch nicht verschlossene Behälter zu vermeiden. Es ist jedoch auch möglich fehlerbehaftete Behälter in Förderrichtung nach dem Kreuztisch über eine Ausstoßeinrichtung aus der Produktion zu nehmen. Dann kann anstelle der Behälterschleuse 28 eine dritte aseptische Abfüllanlage angedockt sein. Folglich ist bevorzugt auch der Kreuztisch K mit einem abgewandelten Behältertransportsystem ausgestattet und die Etikettiermaschine E ist bevorzugt mit drei Aggregaten ausgestattet. Es ist daher möglich, die Anlage zum 3-Farben-System zu ergänzen bzw. zu erweitern.

In Fig. 6 ist ein Einlaufmodul 12 gezeigt, welches über einen Lufttransporteur 26 mit Behältern gespeist wird. Dieses Einlaufmodul 12 bzw. jedes beliebige Einlaufmodul 12 kann bevorzugt als Kreuztisch ausgebildet sein. Abhängig vom Produktionsprogramm kann eine Behältervorwärmeinheit 29 im Einsatz sein. Dies wirkt sich z.B. bei einer Sterilisation, wie z.B. einer H2O2-Trockensterilisation, positiv auf Rückstände aus, insbesondere bei Kunststoffbehältnissen, wie bei PET-Behältern. Bei anderen Behältermaterialien, wie z. B. HDPE ist es vorstellbar, dass auf eine Vorwärmung der Behälter verzichtet werden kann.

Behältersterilisationsverfahren unterliegen z. T. auch gesetzlich geregelten länderspezifischen Zulassungen, die z. B. das Vorwärmen der Behälter nicht vorsehen. Somit kann die Anlage auf länderspezifische Anforderungen angepasst werden.

Es ist ferner denkbar, dass auch eine Behälterherstellmaschine 19 als Einlaufmodul 12 verwendet wird.

Bedingt durch das Isolatorgehäuse 33 sind die Behandlungseinheiten 3/4/7/8 in der Größe beschränkt, dadurch liegt die Anlagenleistung z.B. bei einen 500ml-Behälter bei ca. 12 000 B/h. Die Anlagenleistung kann beispielsweise erhöht werden, wenn der Totwinkel d teilweise belegt wird um die Behandlungszeit zu verlängern. Ungefähr 10 bis 15% Mehrleistung ist dadurch erreichbar. Ferner ist es ebenfalls denkbar, dass auf konstruktiv einfache Weise und in kompakter, platzsparender Bauweise eine Möglichkeit geschaffen wird, Gefäße jeweils zwischen zwei Bearbeitungsvorgängen eine gewisse Wartezeit durchlaufen zu lassen. Details dazu sind in EP1687222B1 beschrieben.

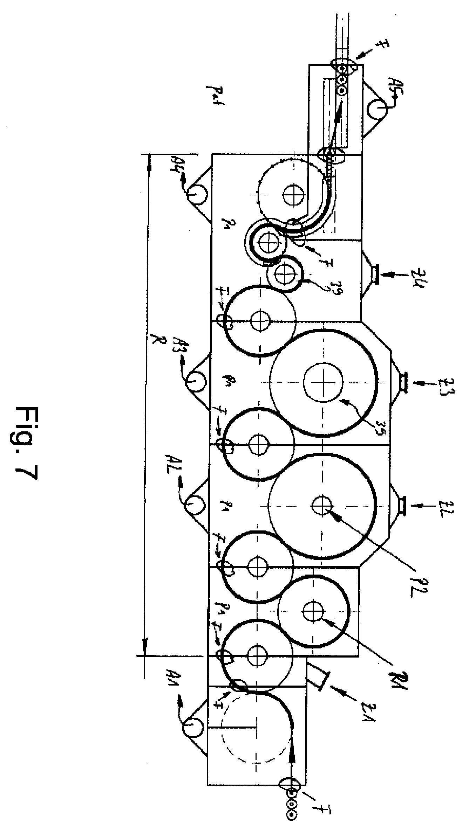

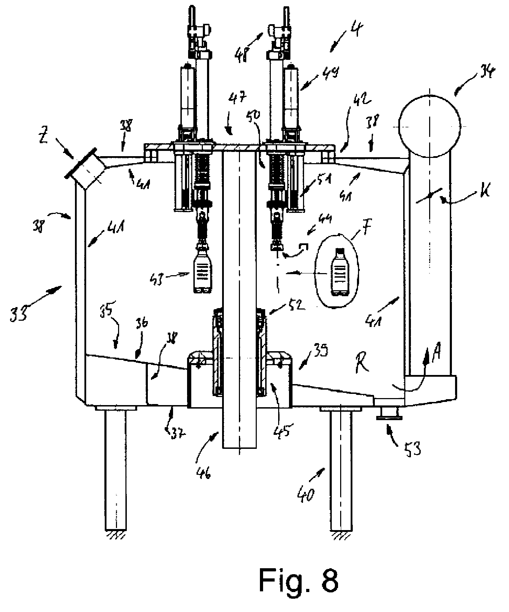

Im Bereich des Reinraums R ist zumindest zeitweise und bevorzugt dauerhaft ein Überdruck zur Umgebung aufrecht zu halten (beispielsweise p₁ ≈ pₐₜ + 10 Pa) (siehe dazu Fig. 7). Gewährleistet wird dies z.B. über mehrere Zuluftstutzen Z1/Z2 usw. Um eine gerichtete Strömung von oben nach unten im Isolatorgehäuse 33 (Abbildung 8) zu bekommen ist die Zuluft z.B. im oberen Bereich des Gehäuses angebracht und die Abluft A1/A2 usw. z.B. im unteren Bereich.
Durch den Behältertransport entstehen zwischen den einzelnen Sektionen (Sterilisator / Ausblasbereich / Füller / Verschließer) und im Ein- und Auslaufbereich der Maschine Überströmflächen, die durch die Lüftungstechnik ausgeregelt werden. Bevorzugt wird in der Produktion Prozessluft P1/P2 dem System zugeführt, welche ebenfalls in die Druckbilanz einwirkt. Die Regelung erfolgt z.B. über Klappen K und/oder über eine Geschwindigkeitsregelung der Zuluftventilatoren. Mindestens ein Drucksensor und/oder eine Steuereinrichtung überwacht, dass der Grenzwert von p₁ nicht unterschritten wird.
Die Zuluft kann zentral oder dezentral mittels Filtern, insbesondere sterilisierbaren Filtern, aufbereitet werden. Die Abluft wird bevorzugt an ein Sammelrohr angeschlossen und in die Umwelt abgegeben. Ein Gaswäscher ist ebenfalls bzw. alternativ vorsehbar.
Bei einem zentralen Lüftungsgerät ist es denkbar, dass die Isolatorentkeimung (z.B. mittels heißem H2O2-Gas) über das Zuluftsystem vorgenommen wird.
Fertigungstechnisch ist das Isolatorgehäuse 33 bevorzugt eine Schweißkonstruktion aus Blech, da diese optimale mikrobiologische Sicherheit bietet.
Die Grundplatte 35 (siehe dazu Fig. 8) besteht aus bevorzugt mindestens einem Bodenblech 37 und mindestens einem Dachblech 36. Vorzugsweise ist die Grundplatte in Längsrichtung (wegen der Wärmeausdehnung) mit Versteifungen 38 versehen. Insbesondere ist denkbar, dass bevorzugt unter Berücksichtigung entsprechender Toleranzen, Flansche 39 in die Grundplatte eingeschweißt sind. Nach der zerspanenden Bearbeitung der Grundplatte werden bevorzugt die Bleche 41 des Isolatorgehäuses 33 angesetzt. Um zum Beispiel der hydraulischen Abdichtung eine ausreichende Steifigkeit zu geben, kann das Gehäuse ebenfalls mit Versteifungen versehen werden. Bevorzugt sind Zu- und Abluftrohre, sowie Reinigungsleitungen und Abläufe in das Isolatorgehäuse integriert. Generell könne z.B. zum Abdichten Usit-Dichtringe eingesetzt werden.

Auf mehreren Flanschen 39 befinden sich bevorzugt die Lagerungen für Transfereinheiten 13 und/oder der Behandlungseinheiten 3/4/7/8.

Beispielhaft ist in Fig. 8 die Verschließmaschine 4 gezeigt. Sie besteht bevorzugt aus einer Lagerung 45, die mit einer Abdichteinrichtung, wie z.B. einer Dichtlippe 52, vor aggressiven Stoffen aus dem Reinraum geschützt ist. Auf der Antriebswelle ist z.B. eine Trägerplatte 47 befestigt, auf der wiederum die Verschließelemente montierbar sind bzw. montiert sind. Eine Kurvenrolle 48 bewegt bevorzugt das Verschießelement 4 auf und ab. Für die Trennung der Hubbewegung zwischen Umgebung und Reinraum ist bevorzugt ein Balg 50 vorgesehen. Ebenfalls außerhalb des Reinraums ist ein Servomotor 49 angeordnet. Die Drehbewegungen wird normalerweise mittels Wellen und Wellendichtring in den Reinraum geführt. Allerdings kann hier auch eine Magnetkupplung vorgesehen sein.

Liegt der Antrieb nicht auf der Achse des Verschließelements, wird das Drehmoment bevorzugt über eine Kraftübertragungseinrichtung, wie z.B. eine Zahnradpaarung 51, auf den Verschlusskonus übertragen.

Behälter und Verschluss 44 werden über ein oder mehrere Transfereinheiten an die Verschließmaschine 4 übergeben. Bevorzugt ist zwischen einer Verschlusssortierung 20 und der Verschlusssterilisationskammer 23 eine Verschlussinspektionseinheit 22 vorhanden. Die Behälter sind auf nicht gezeigten Behälterträgern angeordnet.

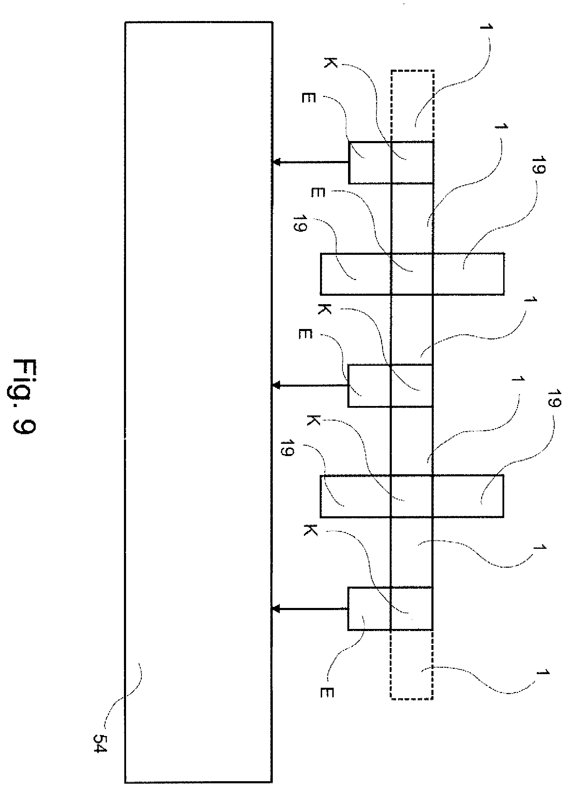

In Fig. 9 ist ein Beispiel einer bevorzugten Anordnung einer Vielzahl miteinander verbundener und/oder zumindest zeitweise oder nacheinander bzw. direkt oder indirekt zusammenwirkender Einrichtungen dargestellt. Die Anzahl an Einrichtungen kann kleiner, gleich oder größer als die in Fig. 9 dargestellten Anzahl sein. Die in Fig. 9 gezeigte Anordnung ist vorteilhaft, da die Behältnisse bevorzugt flussaufwärts und/oder flussabwärts, je nach Produktionsbedingungen, gefördert werden können. So können z.B. Behälter in einer ersten Konfiguration (bevorzugt Vorformlinge) beispielsweise einem Kreuztisch K zugeführt werden, um danach z.B. zu einer oder mehreren Behälterherstellmaschinen gefördert zu werden. Nach oder vor einer Behandlung der Behälter in der Behälterherstellmaschine 19 können die Behälter zur weiteren und/oder anfänglichen Behandlung z.B. einer aseptischen Behälterbehandlungsmaschine 1 zugeführt werden. Nach dem Durchlaufen der verschiedenen Behandlungseinrichtungen 1, 19 oder bereits auch nach dem Durchlaufen einzelner Behandlungseinrichtungen 1, 19 können die Behälter über eine weitere Behandlungseinrichtung, wie z.B. eine Etikettiermaschine E, einem Verpackungs- bzw. Etikettierbereich oder Einrichtung 54 zugeführt werden. Der Verpackungs- bzw. Etikettierbereich erstreckt sich bevorzugt entlang einer Seite des Teils der zuvor beschriebenen Anlage, wobei auch denkbar ist, dass sich der Verpackungs- bzw. Etikettierbereich beidseitig dieses Teils der Anlage erstreckt.

### Bezugszeichenliste

- 1: Aseptische Behälterbehandlungsmaschine
- 2: Behältersterilisation
- 3: Füllmaschine
- 4: Verschließmaschine
- 5: Medienaufbereitung
- 6: Einlaufschleuse
- 7: Behandlungseinheit H2O2-Gas
- 8: Behandlungseinheit Sterilluft
- 9: Auslaufschleuse
- 10: Auslaufgehäuse
- 11: Podest
- 12: Einlaufmodul
- 13: Transfereinheiten
- 14: Trennwand
- 15: Zuführung Behälter-Vorformling
- 16: Sortierung Vorformling
- 17: Heizofen der SBM
- 18: Streckblaseinheit der SBM
- 19: Behälterherstellmaschine z. B. Streckblasmaschine SBM
- 20: Verschlusssortierung und Zuführung (Kaskadensortierwerk)
- 21: Verschlusstransportband
- 22: Verschlussinspektion
- 23: Verschlusssterilisationskammer
- 24: Behälterausstoßeinrichtung
- 25: Abtastvorrichtung (Scanner)
- 26: Lufttransporteur
- 27: Maschinenauslauf
- 28: Behälterschleuse
- 29: Vorwärmeinheit
- 30: Einheit zur Regelung der Verschlussgeschwindigkeit
- 31: Auslaufmodul
- 32: Verschlussschleuse
- 33: Isolatorgehäuse
- 34: Abluft-Sammelrohr
- 35: Grundplatte
- 36: Dachblech der Grundplatte
- 37: Bodenblech der Grundplatte
- 38: Versteifung
- 39: Flansch zur Aufnahme von Lagerungen
- 40: Maschinenfuß
- 41: Blech der Einhausung
- 42: Hydraulische Abdichtung
- 43: Behälter
- 44: Verschluss
- 45: Lagerung
- 46: Antriebswelle
- 47: Trägerplatte
- 48: Kurvenrolle
- 49: Servoantrieb (Verschließkopf)
- 50: Balg
- 51: Zahnrad
- 52: Dichtlippe
- 53: Ablauf
- 54: Verpackung/Palettierung
- A/C: Behälterbehandlungsmaschine z. B. Streckblasmaschine
- B/D: Behälterbehandlungsmaschine z. B. aseptische Abfüllanlage
- E: Etikettiermaschine
- E1/E2: Etikettieraggregat 1 / Etikettieraggregat 2
- K: Kreuztisch
- F1/F2: Förderlinie 1 / 2
- V: Verschlussförderlinie
- S1/S2: Servoantrieb
- T0/T1: Transportstern T0 / T1 usw.
- R: Reinraum
- Z1/Z2: Zuluft
- A1/A2: Abluft
- P1/P2: Prozessluft
- F: Überströmflächen, bedingt durch Behältertransport

- a: Winkel Verschlussbehandlungskammer
- b: Behandlungswinkel a (Sektion)
- c: Behandlungswinkel b (Sektion)
- d: Totwinkel

- H2O2: Wasserstoffperoxid
- SBM: Streckblasmaschine
- B/h: Behälter pro Stunde

## Patentansprüche

1. Anlage zum Behandeln von Behältnissen, insbesondere Vorformlingen und/oder Flaschen, umfassend,
mindestens eine erste Behälterbehandlungseinrichtung (19) zum Behandeln der Behältnisse in einer ersten vorgegebenen Weise und eine im Transportpfad der Behältnisse nachgelagerte zweite Behälterbehandlungseinrichtung (3) zum Behandeln der Behältnisse in einer zweiten Weise, wobei die erste Behandlungsweise von der zweiten Behandlungsweise verschieden ist, und
eine Transporteinrichtung (K) zum zumindest abschnittsweisen Fördern der Behältnisse von der ersten Behälterbehandlungseinrichtung (19) zur zweiten Behandlungseinrichtung (3),
wobei zumindest eine weitere erste oder zweite Behälterbehandlungseinrichtung (3, 19) mit der Transporteinrichtung (K) verbunden ist, und wobei die Transporteinrichtung (K) mindestens zwei direkte abschnittsweise unterschiedliche Transportpfade der Behältnisse ausbildet, **dadurch gekennzeichnet, dass** die Transporteinrichtung (K) mindestens vier Transportsterne (T1, T2, T3, T4) aufweist, wobei jeder dieser Transportsterne mit einem weiteren Transportstern ausgewählt aus zwei der Transportsterne (T1, T2, T3, T4) funktionell verbindbar ist, sodass eine flexible Auswahl bzw. ein flexibler Wechsel zwischen den möglichen Transportpfaden ermöglicht wird.

2. Anlage nach Anspruch 1,
**dadurch gekennzeichnet, dass**
mit den Transportsternen (T1, T2, T3, T4) weitere Transporteinrichtungen (T0) verbunden sind.

3. Anlage nach einem der vorangegangenen Ansprüche,
**dadurch gekennzeichnet, dass**
die Transportsterne (T1, T2, T3, T4) der Transporteinrichtung (K) jeweils eigene Antriebe (S1, S2, S3, S4) aufweisen.

4. Anlage nach Anspruch 3,
**dadurch gekennzeichnet, dass**
die Geschwindigkeit der Transportsterne (T1, T2, T3, T4) in Abhängigkeit vom Transportweg konfigurierbar ist.

5. Anlage nach Anspruch 3 oder 4,
**dadurch gekennzeichnet, dass**
die Transportsterne (T1, T2, T3, T4) Greifelemente aufweisen, die zumindest teilweise steuerbar sind.

6. Anlage nach einem der vorangegangenen Ansprüche,
**dadurch gekennzeichnet, dass**
die erste Behälterbehandlungseinrichtung (19) eine Blaseinrichtung zum Umformen von Vorformlingen in Flaschen ist.

7. Anlage nach einem der vorangegangenen Ansprüche,
**dadurch gekennzeichnet, dass**
die zweite Behälterbehandlungseinrichtung (3) ein Modul zur aseptischen Abfüllung von Behältnissen und/oder eine Einrichtung zum Etikettieren der Behältnisse ist.

8. Anlage nach Anspruch 7,
**dadurch gekennzeichnet, dass**
das Modul zur aseptischen Abfüllung ein Gehäuse (33) aufweist, durch das ein Reinraum ausgebildet ist und in dem die Behältnisse desinfizierbar, abfüllbar und/oder verschließbar sind.

9. Anlage nach einem der vorangegangenen Ansprüche,
**dadurch gekennzeichnet, dass**
im Transportpfad, insbesondere in der Transporteinrichtung und/oder in dem Modul zur aseptischen Abfüllung, mindestens eine Behälterausstoßeinrichtung (24) zum Ausstoßen fehlerhaft behandelter Behältnisse angeordnet ist.

10. Anlage nach einem der Ansprüche 1 bis 9,
**dadurch gekennzeichnet, dass**
ein erster Teil der Behältnisse über einen ersten Transportpfad förderbar ist und ein zweiter Teil der Behältnisse über mindestens einen weiteren Transportpfad förderbar ist, wobei mindestens ein Transportstern (T1, T2, T3, T4) zeitweise den ersten Transportpfad und zeitweise den weiteren Transportpfad mit ausbildet.

11. Anlage nach einem der Ansprüche 1 bis 9,
**dadurch gekennzeichnet, dass**
die Behältnisse mit der Transporteinrichtung (T1, T2, T3, T4) zumindest zeitweise auf demselben Transportpfad transportierbar sind.

12. Verfahren zum Behandeln von Behältnisse, insbesondere zum aseptischen Behandeln von Flaschen, umfassend die Schritte:
Behandeln von Behältnissen mit mindestens einer ersten Behälterbehandlungseinrichtung (19) und mit einer zweiten Behälterbehandlungseinrichtung (3), wobei die Behälter zumindest abschnittsweise mit einer Transporteinrichtung (T1, T2, T3, T4) von der ersten Behandlungseinrichtung (19) zu der zweiten Behandlungseinrichtung (3) gefördert werden,
**dadurch gekennzeichnet, dass**
eine weitere erste oder zweite Behälterbehandlungseinrichtung (3, 19) mit der Transporteinrichtung (T1, T2, T3, T4) verbunden ist und die Behältnisse von der Transporteinrichtung (T1, T2, T3, T4) auf mindestens zwei Transportpfaden transportiert werden, wobei die Transporteinrichtung (K) mindestens vier Transportsterne (T1, T2, T3, T4) aufweist wobei jeder dieser Transportsterne mit einem weiteren Transport-stern ausgewählt aus zwei der Transportsterne (T1, T2, T3, T4) funktionell verbindbar ist, sodass eine flexible Auswahl bzw. ein flexibler Wechsel zwischen den möglichen Transportpfaden ermöglicht wird.

## Claims

1. Plant for treating containers, in particular preforms and/or bottles, comprising
at least one first container treatment device (19) for treating the containers in a first predefined manner and a second container treatment device (3) arranged downstream thereof in the transport path of the containers for treating the containers in a second manner, wherein the first manner of treatment is different from the second manner of treatment, and
a transport device (K) for conveying the containers from the first container treatment device (19) to the second treatment device (3) at least in sections,
wherein at least
a further first or second container treatment device (3, 19) is connected to the transport device (K), and wherein the transport device (K) forms at least two direct and partially different transport paths of the containers, **characterised in that** the transport device (K) comprises at least four transport starwheels (T1, T2, T3, T4), wherein each of these transport starwheels can be connected to a further transport starwheel selected from two of the transport starwheels (T1, T2, T3, T4) in a functional manner so that a flexible selection of a flexible change respectively between the possible transport paths is made possible.

2. Plant according to claim 1, **characterised in that** further transport devices (T0) are connected to the transport starwheels (T1, T2, T3, T4).

3. Plant according to one of the preceding claims, **characterised in that** the transport starwheels (T1, T2, T3, T4) of the transport device (K) each have separate drives (S1, S2, S3, S4).

4. Plant according to claim 3, **characterised in that** the speed of the transport starwheels (T1, T2, T3, T4) can be configured as a function of the transport path.

5. Plant according to claim 3 or 4, **characterised in that** the transport starwheels (T1, T2, T3, T4) have gripping elements which are at least partially controllable.

6. Plant according to one of the preceding claims, **characterised in that** the first container treatment device (19) is a blow moulding device for shaping preforms into bottles.

7. Plant according to one of the preceding claims, **characterised in that** the second container treatment device (3) is a module for the aseptic filling of containers and/or a device for labelling the containers.

8. Plant according to claim 7, **characterised in that** the aseptic filling module comprises a housing (33), by means of which a clean chamber is formed and in which the containers can be disinfected, filled and/or closed.

9. Plant according to one of the preceding claims, **characterised in that** at least one container ejecting device (24) for ejecting incorrectly treated containers is arranged in the transport path, in particular in the transport device and/or in the aseptic filling module.

10. Plant according to one of claims 1 to 9, **characterised in that** a first portion of the containers can be conveyed via a first transport path and a second portion of the containers can be conveyed via at least one further transport path, wherein at least one transport starwheel (T1, T2, T3, T4) at times forms part of the first transport path and at times forms part of the further transport path.

11. Plant according to one of claims 1 to 9, **characterised in that** the containers can be transported by the transport device (T1, T2, T3, T4) at least at times on the same transport path.

12. Method for treating containers, in particular for the aseptic treatment of bottles, comprising the steps:
treating containers by means of at least one first container treatment device (19) and by means of a second container treatment device (3), wherein the containers are conveyed at least in sections by a transport device (T1, T2, T3, T4) from the first treatment device (19) to the second treatment device (3),
**characterised in that**
a further first or second container treatment device (3, 19) is connected to the transport device (T1, T2, T3, T4) and the containers are transported by the transport device (T1, T2, T3, T4) on at least two transport paths,
wherein the transport device (K) comprises at least four transport starwheels (T1, T2, T3, T4), wherein each of these transport starwheels can be connected to a further transport starwheel selected from two of the transport starwheels (T1, T2, T3, T4) in a functional manner, so that a flexible selection or a flexible change respectively between the possible transport paths is made possible.

## Revendications

1. Installation de traitement de contenants, en particulier d'ébauches et/ou de bouteilles, comprenant
au moins un premier dispositif de traitement de contenant (19) destiné à traiter les contenants selon un premier mode prédéfini et un deuxième dispositif de traitement de contenant (3) monté en aval dans le trajet de transport des contenants et destiné à traiter les contenants selon un deuxième mode, le premier mode de traitement étant différent du deuxième mode de traitement, et
un dispositif de transport (K) permettant de transporter au moins sur certaines sections les contenants du premier dispositif de traitement de contenant (19) au deuxième dispositif de traitement de contenant (3),
au moins un autre premier ou deuxième dispositif de traitement de contenant (3, 19) étant relié au dispositif de transport (K), et le dispositif de transport (K) formant au moins deux trajets de transport directs, différents sur certaines sections, des contenants, **caractérisée en ce que** le dispositif de transport (K) comprend au moins quatre systèmes de transport en étoile (T1, T2, T3, T4), chacun de ces systèmes de transport en étoile pouvant être relié fonctionnellement à un autre système de transport en étoile sélectionné parmi deux des systèmes de transport en étoile (T1, T2, T3, T4), de sorte qu'une sélection flexible ou un changement flexible respectivement entre les trajets de transport possibles est permis(e).

2. Installation selon la revendication 1,
**caractérisée en ce que**
d'autres dispositifs de transport supplémentaires (T0) sont reliés aux systèmes de transport en étoile (T1, T2, T3, T4).

3. Installation selon l'une quelconque des revendications précédentes, **caractérisée en ce que**
les systèmes de transport en étoile (T1, T2, T3, T4) du dispositif de transport (K) comprennent chacun des entraînements (S1, S2, S3, S4) distincts.

4. Installation selon la revendication 3,
**caractérisée en ce que**
la vitesse des systèmes de transport en étoile (T1, T2, T3, T4) peut être configurée en fonction du trajet de transport.

5. Installation selon la revendication 3 ou 4,
**caractérisée en ce que**
les systèmes de transport en étoile (T1, T2, T3, T4) comprennent des éléments de saisie qui peuvent être au moins partiellement commandés.

6. Installation selon l'une quelconque des revendications précédentes, **caractérisée en ce que**
le premier dispositif de traitement de contenant (19) est un dispositif de soufflage permettant de transformer les ébauches en bouteilles.

7. Installation selon l'une quelconque des revendications précédentes, **caractérisée en ce que**
le deuxième dispositif de traitement de contenant (3) est un module de remplissage aseptisé de contenants et/ou un dispositif d'étiquetage des contenants.

8. Installation selon la revendication 7,
**caractérisée en ce que**
le module de remplissage aseptisé comprend une boîte (33) à travers lequel est formée une chambre de nettoyage et dans lequel les contenants peuvent être désinfectés, remplis et/ou fermés.

9. Installation selon l'une quelconque des revendications précédentes, **caractérisée en ce qu'**
est disposé dans le trajet de transport, en particulier dans le dispositif de transport et/ou dans le module de remplissage aseptisé, au moins un dispositif d'éjection de contenant (24) permettant d'éjecter des contenants manipulés de manière défectueuse.

10. Installation selon l'une quelconque des revendications 1 à 9, **caractérisée en ce qu'**
une première partie des contenants peut être transportée sur un premier trajet de transport et une deuxième partie des contenants peut être transportée sur au moins un deuxième trajet de transport, au moins un système de transport en étoile (T1, T2, T3, T4) formant par intermittence le premier trajet de transport et par intermittence l'autre trajet de transport.

11. Installation selon l'une quelconque des revendications 1 à 9, **caractérisée en ce que**
les contenants peuvent être transportés au moyen du dispositif de transport (T1, T2, T3, T4) au moins par intermittence sur le même trajet de transport.

12. Procédé de traitement de contenants, en particulier de traitement aseptisée de bouteilles, comprenant les étapes consistant à :
traiter des contenants au moyen d'au moins un premier dispositif de traitement de contenant (19) et d'un deuxième dispositif de traitement de contenant (3), les contenants étant transportés au moins sur certaines sections au moyen d'un dispositif de transport (T1, T2, T3, T4) du premier dispositif de traitement (19) au deuxième dispositif de traitement (3),
**caractérisé en ce qu'**
un autre premier ou deuxième dispositif de traitement de contenant (3, 19) est relié au dispositif de transport (T1, T2, T3, T4) et les contenants sont transportés par le dispositif de transport (T1, T2, T3, T4) sur au moins deux trajets de transport, le dispositif de transport (K) comprenant au moins quatre systèmes de transport en étoile (T1, T2, T3, T4), chacun de ces systèmes de transport en étoile pouvant être relié fonctionnellement à un autre système de transport en étoile parmi deux des systèmes de transport en étoile (T1, T2, T3, T4), de sorte qu'une sélection flexible ou un changement flexible respectivement entre les trajets de transport possibles est permis(e).
